# EUROPEAN PATENT SPECIFICATION

(11) **EP 2 826 358 B1**
(45) Date of publication and mention of the grant of the patent: **19.04.2017**
(21) Application number: 14169421.6
(22) Date of filing: 22.05.2014
(51) Int. Cl.: A01D 75/20, A01D 78/10, A01D 80/00

(54) **Agricultural machine, in particular a haymaking machine**
Landwirtschaftliche Maschine, insbesondere eine Heuerntemaschine
Machine agricole, notamment une machine de fenaison

(30) Priority: 11.07.2013 NL 2011137
(43) Date of publication of application: 21.01.2015
(60) Divisional application: 16166128.5
(73) Proprietor: Forage Innovations B.V., 3147 PB Maassluis (NL)
(72) Inventor: Van den Engel, Alfonsus Jacobus, 3147 PA Maassluis (NL)
(74) Representative: Octrooibureau Van der Lely N.V.

(56) References cited:
- EP-A1- 2 179 641
- EP-A1- 2 591 653
- EP-A2- 0 316 559
- DE-U1- 8 712 165
- GB-A- 2 210 242

## Description

The invention relates to an agricultural machine, in particular to a haymaking machine comprising a frame which is configured to be attached to a vehicle in order to move the agricultural machine in a normal direction of travel, a bearing arm construction having at least one bearing arm, which bearing arm construction is connected to the frame so as to be pivotable about one or more pivot axes, and a plurality of processing members with processing elements for working the land or processing a crop, wherein the processing members are at least displaceable between an operating position and a transport position by pivoting the bearing arm construction about the one or more pivot axes.

In the operating position, the processing elements are positioned in such a manner that they can work the land or process the crop over which the agricultural machine moves, for example rake or ted grass. In the transport position of the processing members, the processing members are folded and supported on the frame so that they are in a position which is convenient for transportation.

However, in the transport position, the processing elements, for example teeth or tines, can protrude towards one side of the agricultural machine and thus cause a risk of injury for people or animals and/or of damage to objects. Such a risk of injury and/or damage is undesirable.

To avoid or at least substantially decrease the risk on injury and/or damage, the agricultural machine may comprise a movable shielding construction to at least partially shield the processing members in the transport position. In a known embodiment from EP 2 591 653, the movable shielding construction comprises two shielding beams located at opposite sides of the agricultural machine.

The shielding beams are pivotable about a horizontal axis running parallel to the normal direction of travel of the agricultural machine between a shielding position and a lower position. In the shielding position the shielding beams are at least partially arranged at the same height as the processing members in the transport position to shield at least partially the processing members.

However, the desired height of the shielding beams may prevent or hinder movement of the processing members between the operating position and the transport position. By moving the shielding beams to the lower position, the shielding beams may no longer hinder or prevent movement of the processing members between the operating position and the transport position.

A drawback of the known embodiment, is that the shielding beams do not shield the processing members at opposite sides of the agricultural machine close to and/or even up to the back end of the agricultural machine, since the presence of the processing members in the operating position prevent the arrangement of a shielding beam at the sides close by and/or up to the back end of the agricultural machine, even when arranged in the lower position.

Furthermore, document EP 2 179 641 discloses an agricultural machine with a barrier device that comprises a band, a winding device and a fastening device, such that the band when fastened runs at the same height as the processing members of the agricultural device.

It is an object of the invention to provide an agricultural machine in which the risk of injury and/or damage by protruding parts of the processing members, in particular the processing elements, in the transport position is removed or at least reduced.

It is a further object of the invention to provide an agricultural machine comprising a movable shielding construction having two shielding beams located at opposite sides of the agricultural machine, which shielding beams extend, in the shielding position, close by and/or up to the back end of the agricultural machine.

The invention provides an agricultural machine comprising:
- a frame which is configured to be attached to a vehicle in order to move the agricultural machine in a normal direction of travel,
- a bearing arm construction having at least one bearing arm, which bearing arm construction is pivotably connected to the frame so as to be pivotable about one or more pivot axes, and
- a plurality of processing members with processing elements for working the land or processing a crop, wherein the processing members are at least displaceable between an operating position and a transport position by pivoting of the least one bearing arm construction is connected to the frame so as to be pivotable about the one or more pivot axes,
wherein the agricultural machine comprises a movable shielding construction to at least partially shield the processing members in the transport position, wherein the movable shielding construction comprises two shielding beams located at opposite sides of the agricultural machine, wherein the shielding beams are movable between a shielding position for shielding at least partially the processing members, and a lower position in which movement of the processing members between the operating position and the transport position is possible, and wherein the movable shielding construction is configured to move the shielding beams upwards and backwards with respect to the normal direction of travel when the shielding beams are moved from the lower position to the shielding position, characterized in that the movable shielding construction is configured to move the shielding beams in a slanted plane between the lower position and the shielding position.

By providing shielding beams at opposite sides of the agricultural machine, that also move backwards, i.e. in a direction opposite to the normal travel direction, during a movement from the lower position to the shielding position, the shielding beams will reach, in the shielding position, further to the back end of the agricultural machine than shielding beams that only move upwards when moved from the lower position to the shielding position. In this way the shielding of processing members may be improved without the shielding beams hindering operation of the processing members, when the processing members are arranged in the operating position and/or without the shielding beams hindering movement of the processing members between the operating position and the transport position.

It will be clear that the shielding beams will move downwards and forwards with respect to the normal direction of travel when the shielding beams are moved from the shielding position to the lower position.

The movement of the shielding beams may be a helical movement about a longitudinal axis of the machine, such that movement of the shielding beams from the lower position to the shielding position results in an upwards movement and a backwards movement. In an alternative embodiment, the movable shielding construction may comprise a first axis of rotation to rotate the shielding beams between a lower position and a higher position and a second axis of rotation to move the shielding beams forwards and backwards with respect to the normal direction of travel of the machine.

The agricultural machine may be any machine having processing members to be shielded in a transportation position to shield the proccesing members, such as for example a hay making machine, a soil cultivation machine, a planting machine or harvesting machine having such processing members. In some embodiments, the processing members may be movably, in particular rotatably, connected to the bearing arm construction.

In an embodiment not according to the invention, the movable shielding construction is configured to move the shielding beams in a substantially vertical plane between the lower position and the shielding position. By movement of the shielding beams within a substantially vertical plane, the shielding beams remain relatively close to the frame.

It is remarked that in an alternative embodiment of a movable shielding construction, but also not according to the invention, the movable shielding construction may be configured to move the shielding beams in a substantially vertical plane between the lower position and the shielding position, while the shielding beams are not moved backwards with respect to the normal direction of travel when the shielding beams are moved from the lower position to the shielding position.

For example, the shielding beams are only moved upwards and downwards with respect to the frame, or the shielding beams may also move forwards, when the shielding beams are moved from the lower position to the shielding position. According to the invention, the movable shielding construction is configured to move the shielding beams in a slanted plane between the lower position and the shielding position. The slanted plane is a plane which is arranged at an acute angle with a horizontal plane, preferably in the range of 20 to 80 degrees, preferably 30 degrees to 70 degrees with the horizontal plane. Further, the slanted plane is preferably substantially parallel to the normal direction of travel.

In an embodiment, the movable shielding construction is configured to move the shielding beams towards each other when the shielding beams are moved from the lower position to the shielding position, and/or the movable shielding construction is configured to move the shielding beams towards a central longitudinal symmetry axis of the agricultural machine when the shielding beams are moved from the lower position to the shielding position. This movement provides further possibilities to displace the shielding beams between a shielding position where they provide proper shielding of the processing members, and a lower position in which the shielding beams do not interfere proper functioning of the hay making machine, and in particular do not hinder movement of the processing members between the operating position and the transport position.

For example, when the shielding beams move in slanted planes between the lower position and the shielding position, the slanted planes in which the shielding beams at opposite sides of the machine move, may intersect at a higher level than where the movement of the shielding beams between the lower position and the shielding position in the slanted planes is performed. As a result, and in addition to the upwards and backwards movement, the shielding beams will move towards each other when the shielding beams are moved from the lower position to the shielding position.

It will be clear that in this embodiment the shielding beams will move downwards and forwards with respect to the normal direction of travel as well as away from each other, when the shielding beams are moved from the shielding position to the lower position.

In an embodiment, the shielding beams, in the shielding position, extend at the backside of the agricultural machine beyond the processing members in the transport position. By moving the shielding beams in the backwards direction beyond the processing members, the shielding beams may not only provide protection at the opposite sides of the agricultural machine, but also at the back end corners of the agricultural machine.

In an embodiment, the movable shielding construction comprises at each side two pivotable link arms connecting the respective shielding beam to the frame, the frame, link arms and shielding beam forming a planar four-bar linkage.

A planar four-bar linkage, in particular a parallelogram four-bar linkage, provides a suitable construction for moving the shielding beams between the lower position and the shielding position. The pivotable link arms, which preferably have substantially the same length, may provide a movement in both the upwards and the backwards direction, when the shielding beams are moved from the lower position to the shielding position. Furthermore, the four-bar linkage may be configured such that the shielding beams run substantially horizontally in both the lower position and the shielding position.

Also, but not according to the invention, the planar four-bar linkage can be used to move the shielding beams in a substantially vertical plane between the lower position and the shielding position. Other means to move the shielding beams in a substantially vertical plane between the lower position and the shielding position may comprise linear actuators and/or guiding elements, or any other suitable device.

By selection of the angle of the pivot axes of the pivotable link arms, the ratio of displacement in upwards, sidewards and backwards direction of the shielding beams in the movement from the lower position to the shielding position can be set.

In an embodiment not according to the invention, the pivotable link arms are pivotable about pivot axes substantially perpendicular to the normal direction of travel to obtain a movement of the shielding beams between the lower position and the shielding position in a substantially vertical plane. In such embodiment, there is no sideward movement of the shielding beams with respect to the frame during movement between the lower position and the shielding position.

In an embodiment, the pivotable link arms are pivotable about pivot axes extending in a substantially vertical plane and arranged at an acute angle with respect to the normal direction of travel to obtain a movement of the shielding beams in a slanted plane between the lower position and the shielding position. Any other angle of the pivot axes of the link arms to obtain a desired movement between a lower position and a shielding position may also be used.

In an embodiment, the movable shielding construction comprises an actuator to move the movable shielding construction between the lower position and the shielding position. An actuator, preferably a hydraulic linear actuator, may be provided to move the shielding beams between the lower position and the shielding position.

In an alternative embodiment, the movable shielding construction may be mechanically linked to a movable part of a bearing arm construction such that when the bearing arms are moved from the operating position to the transport position, the shielding arms are moved from the lower position to the shielding position, preferably at the end of the movement of the bearing arms, and that, when the bearing arms are moved from the transport position to the operating position, the shielding arms are moved from the shielding position to the lower position, preferably at the beginning of the movement of the bearing arms.

In an embodiment, the movable shielding construction comprises a drive mechanism to transfer an actuator movement of the actuator into movement of the movable shielding construction between the lower position and the shielding position.

The drive mechanism may be used to transfer movement of the actuator. In case of a four-bar linkage for each shielding beam at opposite sides of the agricultural machine, the drive mechanism may be formed by at least one drive axle configured to rotate at least one of the link arms in order to move the respective shielding arm between the shielding position and the lower position. A connection rod may be connected between the drive axle and one or more second drive axles to transfer the actuator movement to another link arm. To transfer rotation of the drive axle to the second drive axle, the connection rod may be placed between two rotation transfer arms mounted on each of the drive axle and the second drive axle.

Preferably, the drive axle is mechanically connected to a first pair of link arms at opposite sides of the agricultural machine, and two second drive axles are mechanically connected to each of a second pair of link arms arranged at opposite sides of the agricultural machine.

In an embodiment, the link arms are arranged perpendicular to the respective drive axle or second drive axle. Further, the link arms may be integrally formed with the respective drive axle or second drive axle.

In an embodiment, the agricultural machine comprises a safety device configured to prevent that the processing members can be moved between the operating position and the transport position, when the movable shielding construction is arranged in the shielding position.

Since the shielding beams in the shielding position may hinder movement of the processing members between the operational position and the transport position, it is undesirable that this movement is performed when the shielding beams are positioned in the shielding position. By providing a suitable safety device it may be prevented that the processing members can be moved between the operating position and the transport position, when the movable shielding construction is arranged in the shielding position. As a result, the risk on damage of the processing members and/or movable shielding construction is prevented or at least substantially reduced.

In an embodiment, the safety device comprises a shut-off valve arranged in a hydraulic drive circuit of the bearing arm construction, wherein the shut-off valve is movable between a closed position and an open position, and wherein the shut-off valve is mechanically linked to the movable shielding construction so that the shut-off valve in the closed position when the shielding beams are in the shielding position, and the shut-off valve is arranged in the open position when the shielding beams are in the lower position.

In an embodiment, the movable shielding construction comprises an elongate shielding element connecting the two opposite shielding beams to shield the front side of the processing members in transport position. The shielding beams provide for shielding of the processing members at the opposite sides and, optionally, at the back end corners of the agricultural machine. However, the front side may be at least partially unprotected by the shielding beams. In particular, since the shielding beams also move backwards and forwards, additional protection at the front side may be desirable. An elongate shielding element may be provided to provide such additional protection at the front side of the processing members in transport position, i.e. at the front end and/or front part of the sides of the agricultural machine.

In an embodiment, a front side of the elongate shielding element is pivotably mounted at a fixed location with respect to the frame, wherein both ends of the elongate shielding element are slidably connected to the shielding beams.

By mounting a front side of the elongate shielding element at the front side at a fixed location, the front end of the movable shielding construction remains at a substantially constant location with respect to the frame, and it is avoided that in the lower position the elongate shielding element is moved relatively far in the forwards direction, without any shielding or such being required.

Generally, it is undesirable that the elongate shielding element is moved relatively far in the forward direction as it may interfere with a pulling vehicle of the agricultural machine, in particular when the combination of pulling vehicle and agricultural machine makes a turn, and the pulling vehicle and agricultural machine are in an angled position with respect to each other.

Further characteristics and advantages of the invention will now be elucidated by a description of an embodiment of the invention, with reference to the accompanying drawing, in which:
- Figure 1 shows a side view of a haymaking machine not according to the invention with shielding beams in the lower position;
- Figure 2 shows a side view of the haymaking machine of Figure 1 with shielding beams in the shielding position;
- Figure 3 shows a back end view of the haymaking machine of Figure 1 with shielding beams in the lower position;
- Figure 4 shows a back end view of the haymaking machine of Figure 1 with shielding beams in the shielding position; and
- Figure 5 shows a perspective view of the haymaking machine of Figure 1 without bearing arm construction and processing members and with shielding beams in the lower position; and
- Figure 6 shows a perspective view of the haymaking machine of Figure 1 without bearing arm construction and processing members and with shielding beams in the shielding position.
- Figure 7 shows a side view of a haymaking machine according to an embodiment of the invention with shielding beams in the lower position;
- Figure 8 shows a side view of the haymaking machine of Figure 7 with shielding beams in the shielding position;
- Figure 9 shows a back end view of the haymaking machine of Figure 7 with shielding beams in the lower position;
- Figure 10 shows a back end view of the haymaking machine of Figure 7 with shielding beams in the shielding position; and
- Figure 11 shows a perspective view of the haymaking machine of Figure 7 without bearing arm construction and processing members and with shielding beams in the lower position; and
- Figure 12 shows a perspective view of the haymaking machine of Figure 7 without bearing arm construction and processing members and with shielding beams in the shielding position.

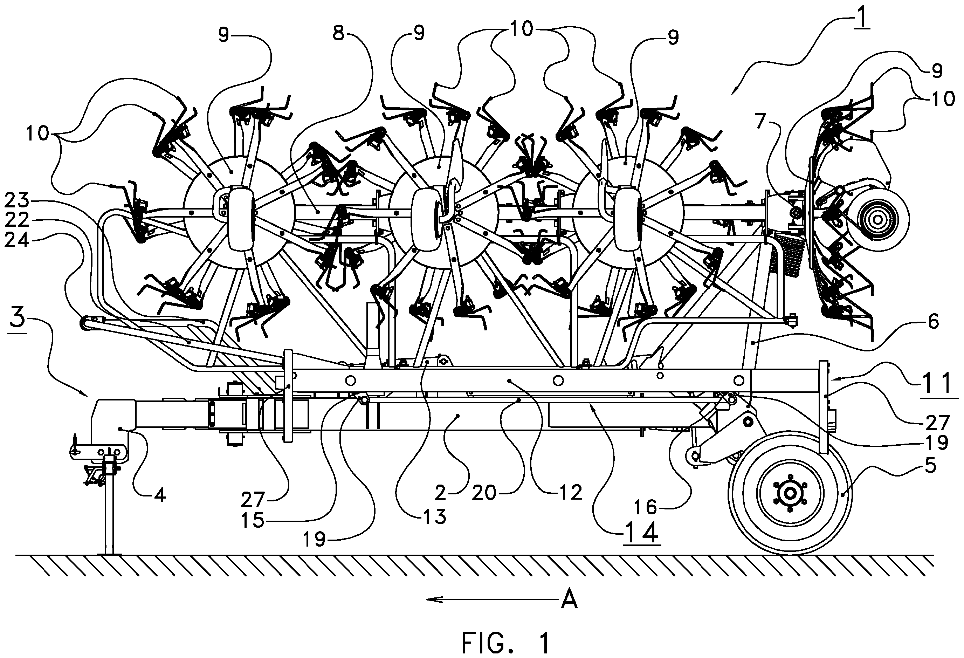

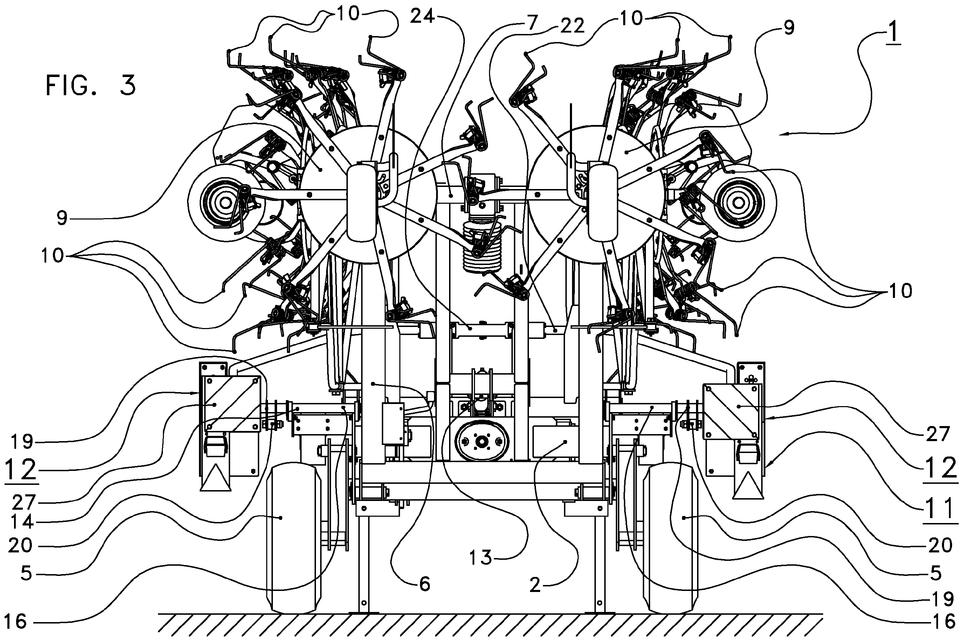

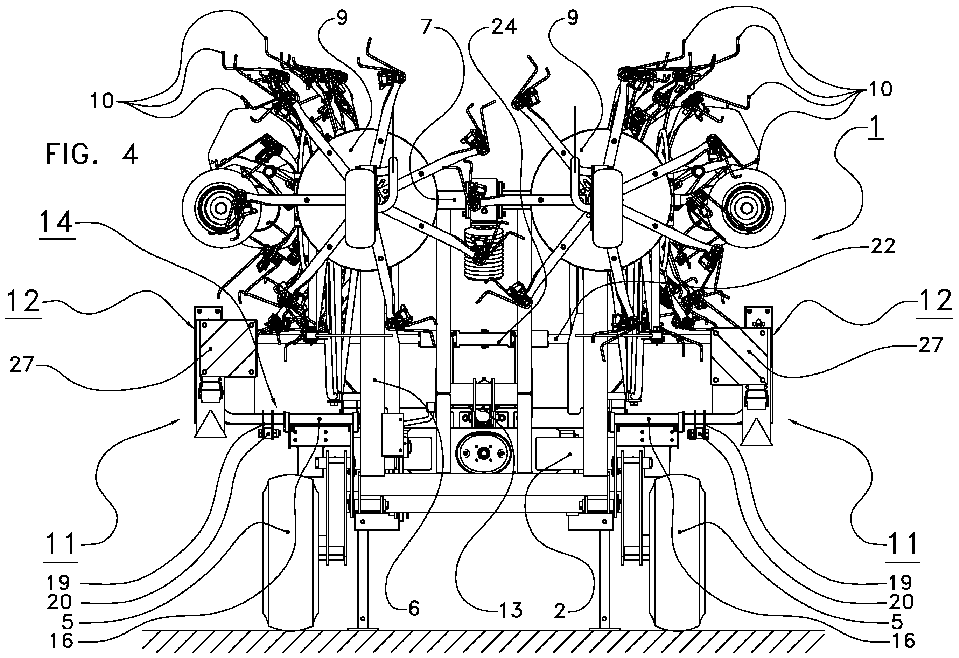

Figures 1 - 4 show side views and back end views of an embodiment of a haymaking machine not according to the invention which is denoted overall by reference numeral 1.

The haymaking machine 1 is configured to ted a crop and has an elongate frame 2. At a front end 3 of the frame 2, a device 4 is provided for coupling the haymaking machine 1 to a pulling vehicle, such as a tractor (not shown). At the rear end of the agricultural machine 1, wheels 5 are provided for supporting the haymaking machine 1. When the haymaking machine 1 is coupled to a tractor or the like, it can be pulled in a normal direction of travel during operation, which normal direction of travel is indicated in Figure 1 by arrow A. The agricultural machine 1 comprises a bearing arm construction pivotable about a number of pivot axes to move the bearing arm construction between the operating position and the transport position. The bearing arm construction comprises a pivotable bearing arm support frame 6, a central bearing arm part 7 and two bearing arms 8. The pivotable bearing arm support frame 6 is pivotable mounted on the frame 2 and pivotable supports a central bearing arm part 7 which in its turn pivotably is connected to the two bearing arms 8.

The central bearing arm part 7 and the two bearing arms 8 support a number of crop-processing members 9. The two bearing arms 8 with processing members 9 are arranged substantially symmetrically with respect to the frame 2. The processing members 9 are arranged rotatably about shafts which are attached to one of the central bearing arm part 7 and the two bearing arms 8. The crop-processing members 9 comprise a number of processing elements 10, such as teeth, tines or the like, which are arranged around the circumference of the processing members 9.

The bearing arm construction is movable to move the processing members 9 between an operating position and a transport position. In the operating position (not shown) the processing members 9 are positioned near the ground in a substantially straight line perpendicular to the normal direction of travel, in such a manner that the processing elements 10 can process crop situated on the ground. In the transport position, the bearing arms 8 are folded towards each other and supported by the frame 2, as is illustrated in Figures 1-4.

In the transport position, it is desirable that the entire haymaking machine 1 remains substantially within the maximum dimensions which are often imposed by the relevant authorities and government bodies with regard to such machines during transportation. In certain countries, for example, the agricultural machine is only allowed to have a maximum height of four meters and a maximum width of three meters in the transport position. It is desirable that the relatively large crop-processing members 9 are optimally situated so that they remain within the prescribed dimensions in the operating position.

In the transport position, the processing members 9 are folded up in order to take up a position which is convenient for transportation. This transport position may result in the processing elements 10 protruding sideways from the haymaking machine 1 and thus causing a potential risk of injury to people or animals or of damage to objects.

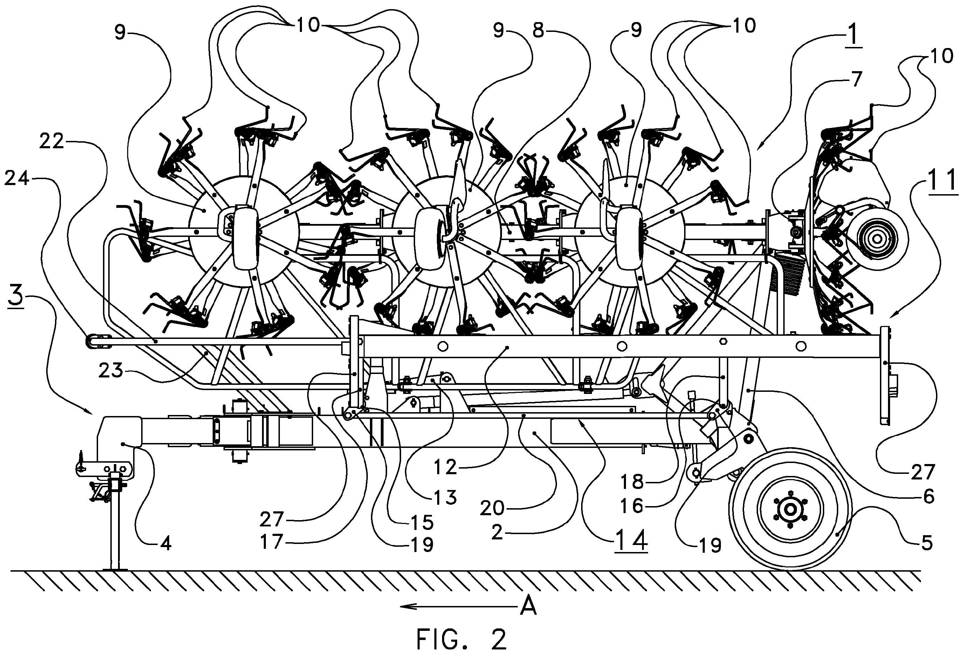

In order to prevent this risk, or at least reduce it, the agricultural machine 1 comprises a movable shielding construction 11. The shielding construction 11 comprises at each of opposite sides of the agricultural machine 1 a shielding beam 12 movable between a lower position, shown in Figures 1, 3 and 5, and a shielding position, shown in Figures 2, 4 and 6.

In the shielding position, the shielding beams 12 are arranged at a height in the range from 1 meters up to 2 meters, preferably at a height in the range from 1.2 meters to 1.7 meters. In this height range, the shielding beams 12 may prevent that a person is directly hit by one the processing elements 10.

However, this desired height of the shielding beams 12 may prevent or hinder movement of the processing members between the operating position and the transport position. By moving the shielding beams 12 to the lower position, the shielding beams 12 may no longer hinder or prevent movement of the processing members between the operating position and the transport position.

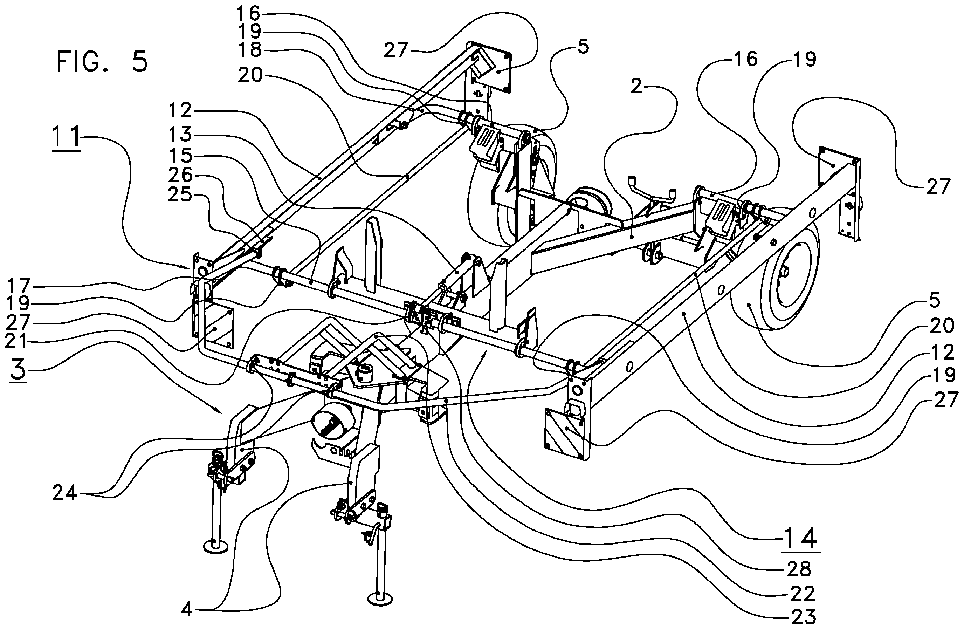

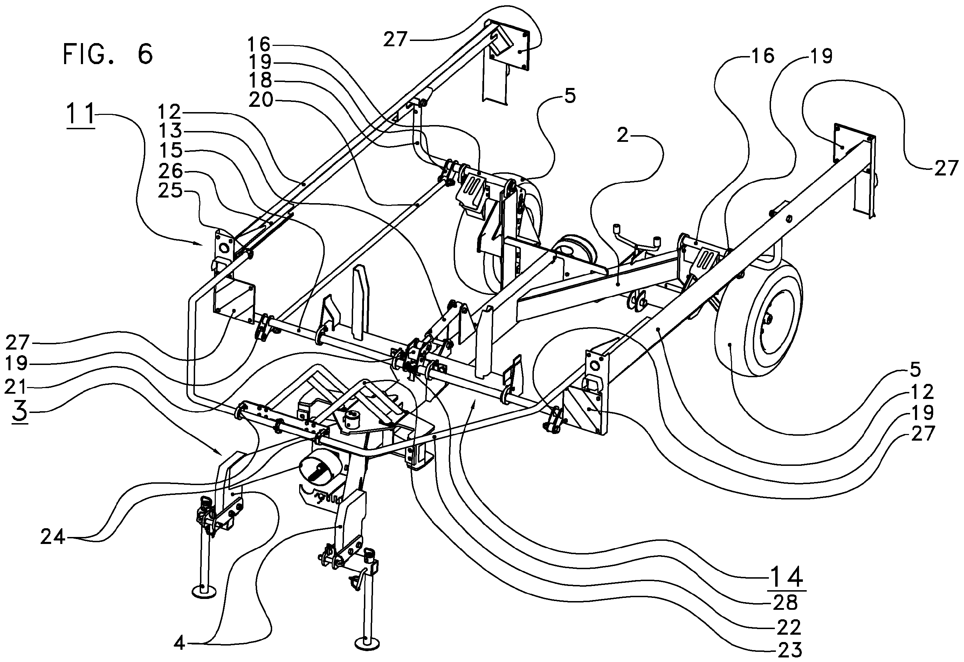

To move the shielding beams 12 between the lower position and the shielding position, a hydraulic linear actuator 13 and a drive mechanism 14 are provided, as more clearly shown in Figures 5 and 6. The drive mechanism 14 comprises a first drive axle 15 and two second drive axles 16.

At each end the first drive axle 15 a front link arm 17 is integrally formed, perpendicularly to the longitudinal direction of the first drive axle 15. The outer ends of the second drive axles 16 are each integrally formed with a back link arm 18 perpendicularly to the longitudinal direction of the second drive axle 16. The free ends of the front link arms 17 and the back link arms 18 are pivotably connected to one of the shielding beams 12.

On the first drive axle 15 two rotation transfer arms 19 and also on each of the two second drive axles 16 a rotation transfer arm 19 is mounted. Each rotation transfer arm 19 of the second drive axle 16 is connected with a connection rod 20 to a rotation transfer arm 19 of the first drive axle 15.

The actuator 13 is mechanically connected to the first drive axle 15 by a rotation arm 21. Extension and retraction of the actuator 13 results in rotation of the first drive axle 15 and, as a result, in a tilting movement of the front link arms 17. Furthermore, rotation of the first drive axle 15 results in a rotation of the second drive axles 16 via the rotation transfer arms 19 and the connection rods 20. The rotation of each of the second drive axles 16 in its turns results in a tilting movement of the back link arms 18.

The frame 2, the front link arm 17, the back link arm 18 and the shielding beam 12, at each side of the agricultural machine 1 form a four-bar link mechanism. By simultaneous tilting movements of the front link arm 17 and the back link arm 18, at one side of the agricultural machine 1 will result in that the shielding beam 12 at that side will move between the shielding position and the lower position, wherein the shielding beam 12 remains orientated substantially horizontally.

In the movements of the shielding beams 12 between the lower position and the shielding position, the shielding beams remain in a substantially vertical plane. This has the advantage that the shielding beams remain both in the lower position and the shielding position relatively close to the frame.

In the lower position, as also shown in Figure 5, the front link arms 17 and back link arms 18 are directed substantially horizontally and in the normal direction of movement A. In the shielding position, the front link arms 17 and back link arms 18 are directed substantially vertically and upwards. Thus, when the shielding beams 12 are moved from the lower position to the shielding position, the shielding arms 12 are moved upwards and backwards, i.e. opposite to the normal direction of travel A.

This backwards movement has the advantage that the shielding beams 12 are moved further backwards to provide more shielding of the processing members 9 towards the back of the agricultural machine 1.

In the shielding position of the shielding beams 12 in the shown embodiment, the shielding beams 12 extend at the backside of the agricultural machine 1 beyond the processing members 9 carried, in the transport position, by the central bearing arm part 7. As a result, the shielding beams 12 provide shielding of the processing members 9 up to and passed the back end corners of the agricultural machine 1.

At the front side of the agricultural machine, an elongate rod shaped shielding element 22 is provided. The shielding element 22 is connected with both front ends of the shielding beams 12 to provide a shielding of the processing members 9 at the front end and front parts of the sides of the agricultural machine 1.

A shielding element support frame 23 is mounted on a front side of the frame 2 to provide a stationary mounting location 24 for pivotable support of the shielding element 22 at the front side in a fixed position with respect to the frame 2. The ends 25 of the shielding element 22 are slidably and rotatably mounted in a sliding groove 26 mounted on the shielding beams 12, so that the ends 25 will follow, but not hinder, movement of the shielding beams 12 between the lower position and the shielding position.

The advantage of the stationary mounting location 24 of the shielding element 22 is that the front end of the shielding element 22 does not move forwards when the shielding beams 12 are brought from the shielding position to the lower position. When the shielding element 12 would be allowed to move forward, it may interfere with the movement of a pulling vehicle pulling the agricultural machine 1, in particular when the combination of pulling vehicle and the agricultural machine 1 are not aligned with respect to each other, for example when the combination makes a turn.

The height of the mounting location 24 is selected such that in the shielding position of the shielding beams 12, the shielding element 22 runs substantially horizontally and substantially at the same height as the shielding beams 12.

The combination of the shielding beams 12 and the shielding element 22 provide a continuous shielding of the processing members 9 at the front end, at opposite sides, and at the corner areas of a back end of the agricultural machine 1, as shown in Figure 6.

The front and back ends of the shielding beams are provided with a plate shaped marking object 27 to mark a corner and/or side of the agricultural machine 1.

When the shielding beams 12 are arranged in the shielding position, the presence of the shielding beams 12 may prevent or hinder movement of the processing members between the operating position and the transport position. In particular the unfolding of the bearing arms 8 with respect to the central bearing arm part 7 may not be carried out when the shielding beams 12 are positioned in the shielding position.

To avoid that the folding and unfolding actuator or actuators that actuate the folding and unfolding of the bearing arms 8 are inadvertently actuated, when the shielding beams 12 are in the shielding position, the agricultural machine 1 comprises a safety device configured to avoid that the actuator or actuators that actuate the folding and unfolding of the bearing arms 8 can be actuated when the shielding beams 12 are in the shielding position. The safety device comprises a shut-off valve 28 arranged in a hydraulic drive circuit of the folding and unfolding actuator or actuators. The shut-off valve 28 is movable between a closed position and an open position.

The shut-off valve 28 is mechanically linked to the rotation arm 21 of the actuator 13 so that the shut-off valve 28 is arranged in the closed position when the shielding beams 12 are in the shielding position, and the shut-off valve 28 is arranged in the open position when the shielding beams are in the lower position.

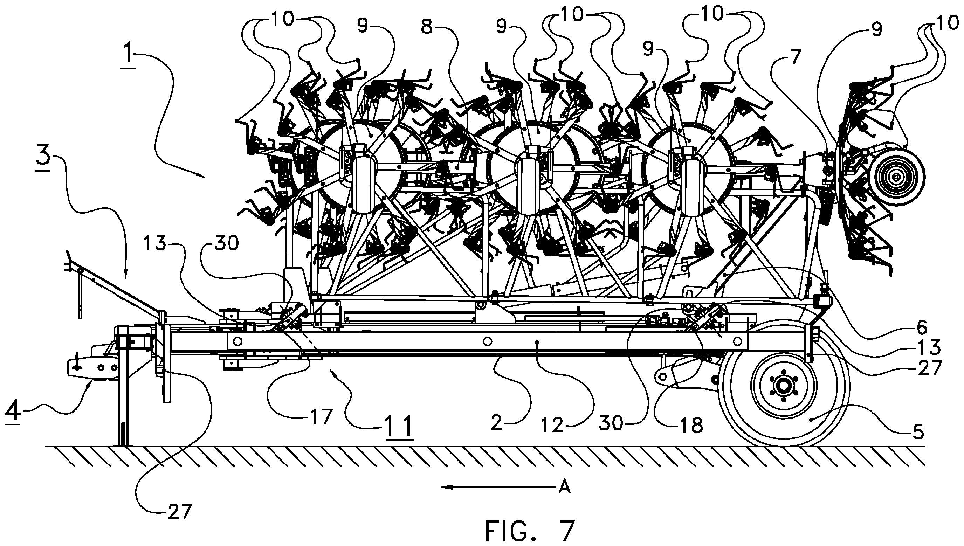

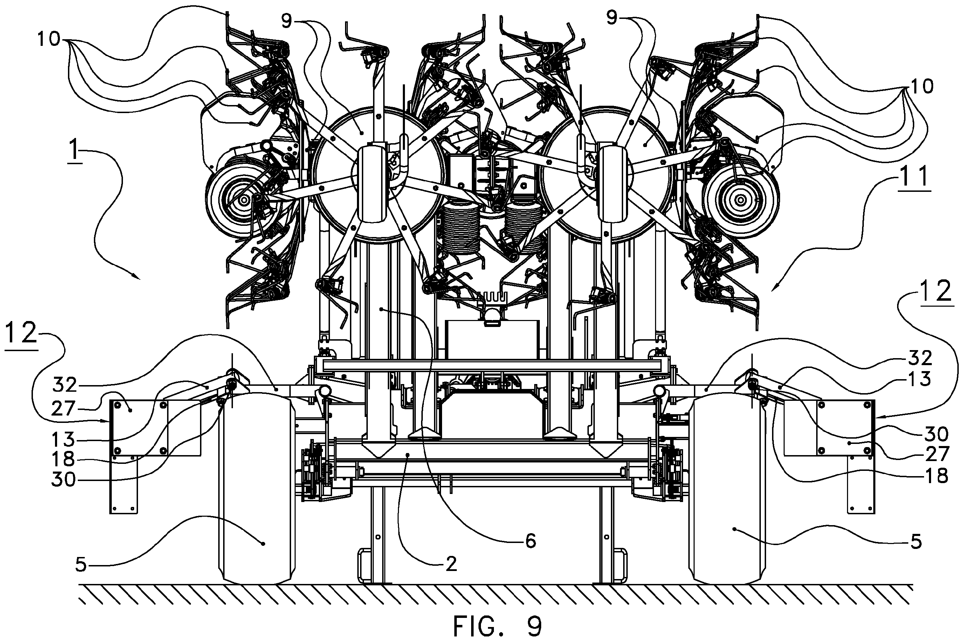

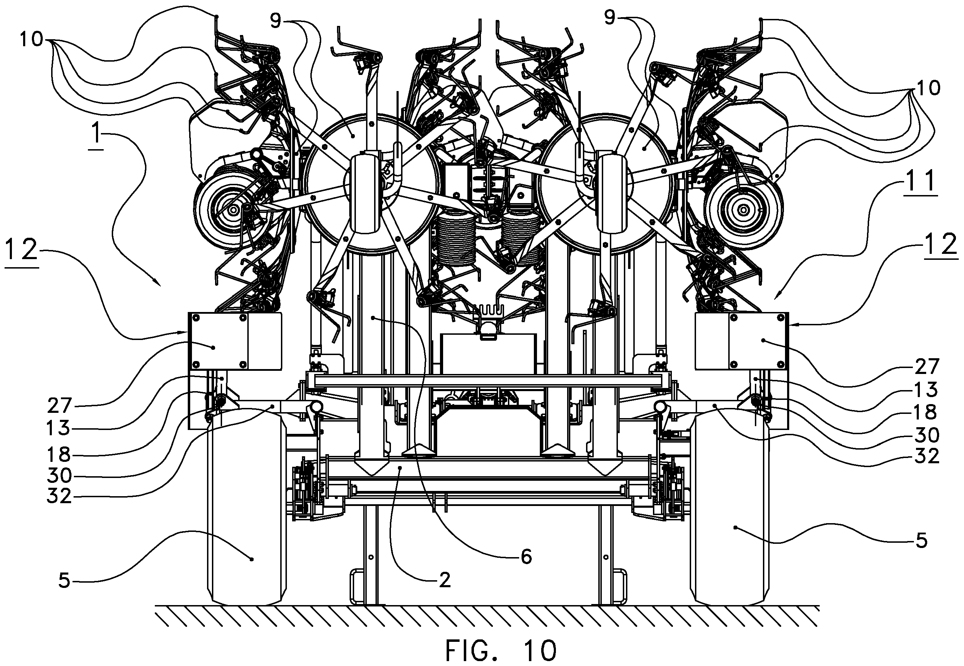

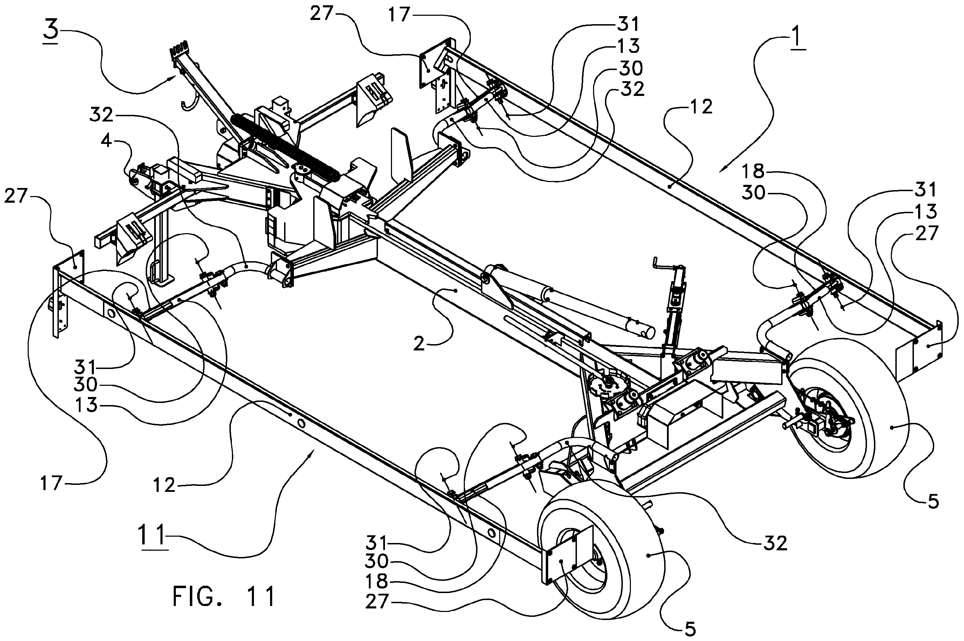

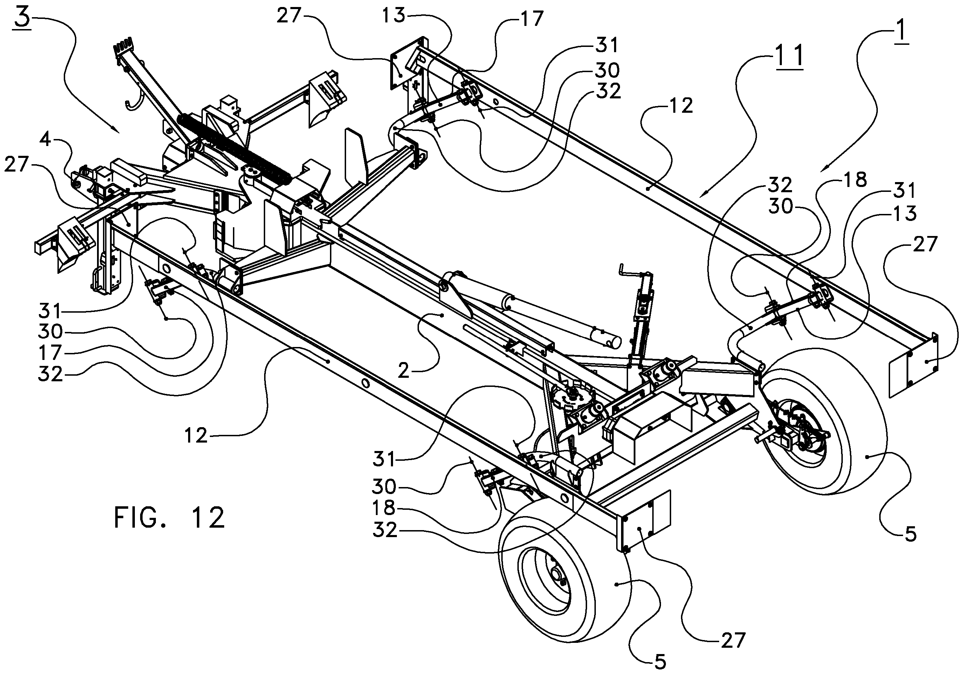

Figures 7 - 12 show side views and back end views of an alternative embodiment of a haymaking machine according to the invention. The same parts or parts having the same or substantially the same function are indicated by corresponding reference numerals as used in Figures 1-6.

The haymaking machine 1 of Figures 7 - 12 is configured to ted a crop. When the haymaking machine 1 is coupled to a tractor or the like, it can be pulled in a normal direction of travel A. The haymaking machine 1 comprises a bearing arm construction having a pivotable bearing arm support frame 6, a central bearing arm part 7 and two bearing arms 8. The bearing arm construction is, similarly to the embodiment of Figures 1-6, movable to move the processing members 9 between an operating position and a transport position. Main difference is that in the bearing arm construction of Figures 7-12, the bearing arms carry more processing members 9 and are pivotable.

In the transport position, the processing members 9 are folded up in order to take up a position which is convenient for transportation. This transport position results in the processing elements 10 protruding sideways from the haymaking machine 1 and thus causing a potential risk of injury to people or animals or of damage to objects.

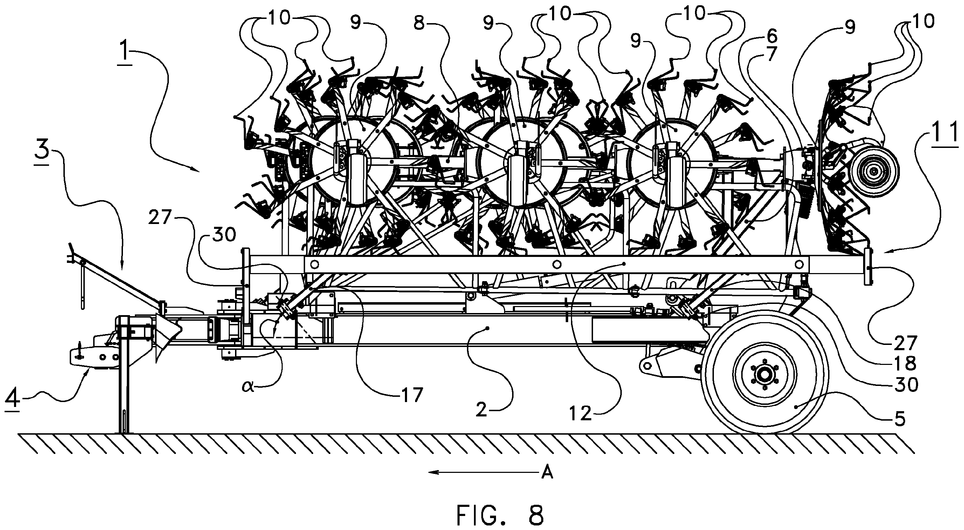

The agricultural machine 1 comprises a movable shielding construction 11 to shield the processing members 9 during transport. The shielding construction 11 comprises at each of opposite sides of the agricultural machine 1 a shielding beam 12 movable between a lower position, shown in Figures 7, 9 and 11, and a shielding position, shown in Figures 8, 10 and 12.

In the shielding position, the shielding beams 12 are arranged at a height in the range from 1 meters up to 2 meters, preferably at a height in the range from 1.2 meters to 1.7 meters. In this height range, the shielding beams 12 may prevent that a person is directly hit by one the processing elements 10. This desired height of the shielding beams 12 may prevent or hinder movement of the processing members between the operating position and the transport position. By moving the shielding beams 12 to the lower position, the shielding beams 12 may no longer hinder or prevent movement of the processing members between the operating position and the transport position.

To move the shielding beams 12 between the lower position and the shielding position, each shielding beam 12 is mounted on a front link arm 17 and a back link arm 18.

The frame 2, front link arm 17, back link arm 18 and the shielding beam 12, at each side of the agricultural machine 1 form a four-bar link mechanism. By simultaneous tilting movements of the front link arm 17 and the back link arm 18, at one side of the agricultural machine 1 will result in that the shielding beam 12 at that side will move between the shielding position and the lower position, wherein the shielding beam 12 remains orientated substantially horizontally.

The frame 2 comprises frame beams 32 at the end of which pivot axes 30 are provided to pivotably support the front and back link arms 17, 18. Each of the front link arms 17 and back link arms 18 is pivotably movable with respect to the frame 2 about such pivot axis 30 to make movement between the shielding position and lower position possible. The pivot axes 30 extend in a substantially vertical plane and are arranged at an acute angle α with respect to the horizontal plane normal direction of travel A. As a result of the acute angle α, the shielding beams 12 will move upwards, backwards with respect with the normal direction of travel A and towards each other, when the shielding beam 12 is moved from the lower position to the shielding position.

Correspondingly, the shielding beams 12 will move downwards, forwards with respect with the normal direction of travel A and away from each other, when the shielding beams 12 is moved from the shielding position to the lower position.

The acute angle α is in the shown embodiment about 45 degrees, but may vary in other embodiments in dependence on the desired ratio between displacements in the different directions upwards, backwards and sidewards in the movement of the shielding beam 12 from the lower position to the shielding position and vice versa. The angle may for example be in the range 20 to 70 degrees, preferably 35 to 55 degrees.

The shielding beams 12 are pivotably mounted on the front link arm 17 and the back link arm 18 at second pivot axes 31 to maintain the same orientation of the shielding beams 12 in the lower position and the shielding position. The angle of the pivot axes 30 and the second pivot axes substantially correspond.

For each of the front link arms 17 and back link arms 18, an hydraulic actuator 13 is provided to move the shielding beam 12 between the lower position and the shielding position. In alternative embodiments, other actuators or actuator arrangements may be provided to move the shielding beams 12 between the lower position and the shielding position.

The shielding beams 12, when moved from the lower position to the shielding position, will also move backwards, i.e. opposite to the normal direction of travel A. This backwards movement has the advantage that the shielding beams 12 are moved further backwards to provide more shielding of the processing members 9 towards the back of the agricultural machine 1. In the shielding position of the shielding beams 12 in the shown embodiment, the shielding beams 12 extend at the backside of the agricultural machine 1 beyond the processing members 9 carried, in the transport position, by the central bearing arm part 7. As a result, the shielding beams 12 provide shielding of the processing members 9 up to and passed the back end corners of the agricultural machine 1.

When the shielding beams 12 are arranged in the shielding position, the presence of the shielding beams 12 may prevent or hinder movement of the processing members between the operating position and the transport position. In particular the unfolding of the bearing arms 8 with respect to the central bearing arm part 7 may not be carried out when the shielding beams 12 are positioned in the shielding position. A safety device (not shown) may be provided to prevent movement of the bearing arm construction to or from the transport position, when the shielding beams 12 are in the transport position.

Hereinabove, embodiments of a movable shielding construction for a haymaking machine hace been described. Such movable shielding construction may also be used in any other agricultural machine to shield its proccesing members, such as for example a soil cultivation machine, a planting machine or harvesting machine having processing members to be shielded in a transportation position.

The processing members may be movably, in particular rotatably, connected to the bearing arm construction, or may be fixedly connected to the bearing arm construction.

Other embodiments of the invention will be apparent to those skilled in the art from consideration of the specification and practice of the invention disclosed herein. It is intended that the specification and examples be considered as exemplary only, with a true scope of the invention being indicated by the following claims.
1 - haymaking machine
2 - frame
3 - front end of the frame
4 - coupling device
5 - wheels
6 - bearing arm support frame
7 - central bearing arm part
8 - bearing arm
9 - crop-processing members
10 - processing elements
11 - movable shielding construction
12 - shielding beam
13 - hydraulic linear actuator
14 - drive mechanism
15 - first drive axle
16 - second drive axles
17 - front link arm
18 - back link arm
19 - rotation transfer arm
20 - connection rod
21 - rotation arm
22 - shielding element
23 - shielding element support frame
24 - mounting location
25 - ends of the shielding element
26 - sliding groove
27 - plate shaped marking object
28 - a shut-off valve
30 - pivot axis
31 - second pivot axis
32 - frame beam
A - normal direction of travel

## Claims

1. An agricultural machine (1) comprising:
- a frame (2) which is configured to be attached to a vehicle in order to move the agricultural machine (1) in a normal direction of travel (A),
- a bearing arm construction (6, 7, 8) having at least one bearing arm (8), which bearing arm construction is pivotably connected to the frame (2) so as to be pivotable about one or more pivot axes, and
- a plurality of processing members (9) with processing elements (10) for working the land or processing a crop, wherein the processing members (9) are at least displaceable between an operating position and a transport position by pivoting of the least one bearing arm construction about the one or more pivot axes,
wherein the agricultural machine (1) comprises a movable shielding construction (11) to at least partially shield the processing members (9) in the transport position, wherein the movable shielding construction comprises two shielding beams (12) located at opposite sides of the agricultural machine, wherein the shielding beams are movable between a shielding position for shielding at least partially the processing members (9), and a lower position in which movement of the processing members between the operating position and the transport position is possible, and wherein the movable shielding construction (11) is configured to move the shielding beams (12) upwards and backwards with respect to the normal direction of travel (A) when the shielding beams are moved from the lower position to the shielding position, **characterized in that** the movable shielding construction (11) is configured to move the shielding beams (12) in a slanted plane between the lower position and the shielding position.

2. The agricultural machine (1) of claim 1, wherein the slanted plane is substantially parallel to the normal direction of travel.

3. The agricultural machine (1) of any of the claims 1 or 2, wherein the movable shielding construction (11) is configured to move the shielding beams (12) towards each other when the shielding beams are moved from the lower position to the shielding position.

4. The agricultural machine (1) of any of the claims 1-3, wherein the shielding beams (12), in the shielding position, extend at the backside of the agricultural machine up to or beyond the processing members (9) in the transport position.

5. The agricultural machine (1) of any of the claims 1-4, wherein the movable shielding construction (10) comprises at each side two pivotable link arms (17, 18) connecting the respective shielding beam (12) to the frame (2), wherein the frame, link arms and shielding beam, at each side of the agricultural machine, form a planar four-bar linkage.

6. The agricultural machine (1) of claim 5, wherein the planar four-bar linkage is a parallelogram four-bar linkage.

7. The agricultural machine (1) of claim 5 or 6, wherein the pivotable link arms are pivotable about pivot axes extending in a substantially vertical plane and arranged at an acute angle with respect to the normal direction of travel to obtain a movement of the shielding beams (12) in a slanted plane between the lower position and the shielding position.

8. The agricultural machine (1) of any of the preceding claims, wherein the movable shielding construction (11) comprises an actuator (13) to move the movable shielding construction between the lower position and the shielding position.

9. The agricultural machine (1) of any of the preceding claims, wherein the movable shielding construction (11) comprises a drive mechanism (14) to transfer an actuator movement of the actuator (13) into movement of the movable shielding construction (11) between the lower position and the shielding position.

10. The agricultural machine (1) of claim 8 or 9, wherein the actuator (13) is a hydraulic actuator.

11. The agricultural machine (1) of any of the preceding claims, wherein the agricultural machine comprises a safety device configured to prevent that the processing members (9) can be moved between the operating position and the transport position, when the movable shielding construction (11) is arranged in the shielding position.

12. The agricultural machine (1) of claim 11, wherein the safety device comprises a shut-off valve (28) arranged in a hydraulic drive circuit of the bearing arm construction, wherein the shut-off valve is movable between a closed position and an open position, and wherein the shut-off valve is mechanically linked to the movable shielding construction (11) so that the shut-off valve is in the closed position when the shielding beams are in the shielding position, and the shut-off valve is arranged in the open position when the shielding beams are in the lower position.

13. The agricultural machine (1) of any of the preceding claims, wherein the movable shielding construction (11) comprises an elongate shielding element (22) connecting the two opposite shielding beams (12) to shield the front side of the processing members (9) in transport position.

14. The agricultural machine (1) of claim 13, wherein a front side of the elongate shielding element (22) is pivotably mounted at a fixed mounting location (24), and wherein both ends (25) of the elongate shielding element are slidably connected to the shielding beams.

15. The agricultural machine (1) of any of the preceding claims, wherein at least one end of the shielding beams (12) is arranged on a corner of the agricultural machine to serve as a marking device which marks a corner and/or side of the agricultural machine (1).

16. The agricultural machine (1) of any of the preceding claims, wherein the movable shielding construction is configured to provide continuous shielding of processing members (9) at a front end, at opposite sides, and at at least corner areas of a back end of the agricultural machine.

17. The agricultural machine (1) of any of the preceding claims, wherein the shielding beams (12), when positioned in the shielding position, are arranged at a height in the range from 1 meters up to 2 meters, preferably at a height in the range from 1.2 meters to 1.7 meters.

## Patentansprüche

1. Landwirtschaftliche Maschine (1), die Folgendes umfasst:
- einen Rahmen (2), der dazu konfiguriert ist, zur Bewegung der landwirtschaftlichen Maschine (1) in einer gewöhnlichen Fahrtrichtung (A) an einem Fahrzeug befestigt zu werden,
- eine Lagerarmkonstruktion (6, 7, 8) mit mindestens einem Lagerarm (8), wobei die Lagerarmkonstruktion dahingehend mit dem Rahmen (2) schwenkbar verbunden ist, um eine oder mehrere Schwenkachsen schwenkbar zu sein, und
- mehrere Verarbeitungsglieder (9) mit Verarbeitungselementen (10) zur Landbearbeitung oder Verarbeitung eines Ernteguts, wobei die Verarbeitungsglieder (9) mindestens zwischen einer Betriebsstellung und einer Transportstellung durch Schwenken der mindestens einen Lagerarmkonstruktion um die eine oder die mehreren Schwenkachsen verschiebbar sind,
wobei die landwirtschaftliche Maschine (1) eine bewegliche Abschirmungskonstruktion (11) zum zumindest teilweisen Abschirmen der Verarbeitungsglieder (9) in der Transportstellung umfasst, wobei die bewegliche Abschirmungskonstruktion zwei Abschirmungsträger (12) umfasst, die auf gegenüberliegenden Seiten der landwirtschaftlichen Maschine positioniert sind, wobei die Abschirmungsträger zwischen einer Abschirmungsstellung zum zumindest teilweisen Abschirmen der Bearbeitungsglieder (9) und einer abgesenkten Stellung, in der eine Bewegung der Verarbeitungsglieder zwischen der Betriebsstellung und der Transportstellung möglich ist, beweglich sind,
und wobei die bewegliche Abschirmungskonstruktion (11) dazu konfiguriert ist, die Abschirmungsträger (12) bezüglich der gewöhnlichen Fahrtrichtung (A) nach oben und nach hinten zu bewegen, wenn die Abschirmungsträger von der abgesenkten Stellung in die Abschirmungsstellung bewegt werden,
**dadurch gekennzeichnet, dass** die bewegliche Abschirmungskonstruktion (11) dazu konfiguriert ist, die Abschirmungsträger (12) in einer Neigungsebene zwischen der abgesenkten Stellung und der Abschirmungsstellung zu bewegen.

2. Landwirtschaftliche Maschine (1) nach Anspruch 1, wobei die Neigungsebene im Wesentlichen parallel zu der gewöhnlichen Fahrtrichtung ist.

3. Landwirtschaftliche Maschine (1) nach einem der Ansprüche 1 oder 2, wobei die bewegliche Abschirmungskonstruktion (11) dazu konfiguriert ist, die Abschirmungsträger (12) aufeinander zu zu bewegen, wenn die Abschirmungsträger aus der abgesenkten Stellung in die Abschirmungsstellung bewegt werden.

4. Landwirtschaftliche Maschine (1) nach einem der Ansprüche 1-3, wobei sich die Abschirmungsträger (12) in der Abschirmungsstellung auf der Rückseite der landwirtschaftlichen Maschine bis zu den Verarbeitungsgliedern (9) in der Transportstellung oder über diese hinaus erstrecken.

5. Landwirtschaftliche Maschine (1) nach einem der Ansprüche 1-4, wobei die bewegliche Abschirmungskonstruktion (10) auf jeder Seite zwei schwenkbare Verbindungsarme (17, 18) umfasst, die den jeweiligen Abschirmungsträger (12) mit dem Rahmen (2) verbinden, wobei der Rahmen, die Verbindungsarme und der Abschirmungsträger auf jeder Seite der landwirtschaftlichen Maschine ein planares vierstängiges Gestänge bilden.

6. Landwirtschaftliche Maschine (1) nach Anspruch 5, wobei das planare vierstängige Gestänge ein vierstängiges Parallelogrammgestänge ist.

7. Landwirtschaftliche Maschine (1) nach Anspruch 5 oder 6, wobei die schwenkbaren Verbindungsarme um in einer im Wesentlichen vertikalen Ebene verlaufende Schwenkachsen schwenkbar sind und in einem spitzen Winkel zur gewöhnlichen Fahrtrichtung angeordnet sind, um eine Bewegung der Abschirmungsträger (12) in einer Neigungsebene zwischen der abgesenkten Stellung und der Abschirmungsstellung zu erzielen.

8. Landwirtschaftliche Maschine (1) nach einem der vorhergehenden Ansprüche, wobei die bewegliche Abschirmungskonstruktion (11) einen Aktuator (13) zu Bewegung der beweglichen Abschirmungskonstruktion zwischen der abgesenkten Stellung und der Abschirmungsstellung umfasst.

9. Landwirtschaftliche Maschine (1) nach einem der vorhergehenden Ansprüche, wobei die bewegliche Abschirmungskonstruktion (11) einen Antriebsmechanismus (14) zur Übertragung einer Aktuatorbewegung des Aktuators (13) in eine Bewegung der beweglichen Abschirmungskonstruktion (11) zwischen der abgesenkten Stellung und der Abschirmungsstellung umfasst.

10. Landwirtschaftliche Maschine (1) nach Anspruch 8 oder 9, wobei der Aktuator (13) ein hydraulischer Aktuator ist.

11. Landwirtschaftliche Maschine (1) nach einem der vorhergehenden Ansprüche, wobei die landwirtschaftliche Maschine eine Sicherheitsvorrichtung umfasst, die dazu konfiguriert ist, zu verhindern, dass die Verarbeitungsglieder (9) zwischen der Betriebsstellung und der Transportstellung bewegt werden können, wenn die bewegliche Abschirmungskonstruktion (11) in der Abschirmungsstellung angeordnet ist.

12. Landwirtschaftliche Maschine (1) nach Anspruch 11, wobei die Sicherheitsvorrichtung ein Sperrventil (28) umfasst, das in einem Hydraulikantriebskreis der Lagerarmkonstruktion angeordnet ist, wobei das Sperrventil zwischen einer geschlossenen Stellung und einer geöffneten Stellung beweglich ist und wobei das Sperrventil mit der beweglichen Abschirmungskonstruktion (11) mechanisch verbunden ist, so dass sich das Sperrventil in der geschlossenen Stellung befindet, wenn sich die Abschirmungsträger in der Abschirmungsstellung befinden, und das Sperrventil in der geöffneten Stellung angeordnet ist, wenn sich die Abschirmungsträger in der abgesenkten Stellung befinden.

13. Landwirtschaftliche Maschine (1) nach einem der vorhergehenden Ansprüche, wobei die bewegliche Abschirmungskonstruktion (11) ein längliches Abschirmungselement (22) umfasst, das die beiden gegenüberliegenden Abschirmungsträger (12) dahingehend verbindet, die Vorderseite der Verarbeitungsglieder (9) in der Transportstellung abzuschirmen.

14. Landwirtschaftliche Maschine (1) nach Anspruch 13, wobei eine Vorderseite des länglichen Abschirmungselements (22) an einer festen Befestigungsstelle (24) schwenkbar befestigt ist und wobei beide Enden (25) des länglichen Abschirmungselements verschiebbar mit den Abschirmungsträgern verbunden sind.

15. Landwirtschaftliche Maschine (1) nach einem der vorhergehenden Ansprüche, wobei mindestens ein Ende der Abschirmungsträger (12) dahingehend an einer Ecke der landwirtschaftlichen Maschine angeordnet ist, als eine Kennzeichnungsvorrichtung zu dienen, die eine Ecke und/oder Seite der landwirtschaftlichen Maschine (1) kennzeichnet.

16. Landwirtschaftliche Maschine (1) nach einem der vorhergehenden Ansprüche, wobei die bewegliche Abschirmungskonstruktion dazu konfiguriert ist, eine durchgängige Abschirmung von Verarbeitungsgliedern (9) an einem vorderen Ende, auf gegenüberliegenden Seiten und mindestens an Eckbereichen an einem hinteren Ende der landwirtschaftlichen Maschine bereitzustellen.

17. Landwirtschaftliche Maschine (1) nach einem der vorhergehenden Ansprüche, wobei die Abschirmungsträger (12) bei Positionierung in der Abschirmungsstellung auf einer Höhe im Bereich von 1 Meter bis zu 2 Metern, vorzugsweise auf einer Höhe im Bereich von 1,2 Metern bis 1,7 Metern, angeordnet sind.

## Revendications

1. Engin agricole (1) comprenant :
- un châssis (2) qui est configuré pour être attaché à un véhicule afin de déplacer l'engin agricole (1) dans une direction normale de déplacement (A),
- une structure de bras porteur (6, 7, 8) comportant au moins un bras porteur (8), ladite structure de bras porteur étant raccordée à pivotement au châssis (2) de façon à pouvoir pivoter autour d'un ou de plusieurs axes de pivotement, et
- une pluralité d'organes de traitement (9) comportant des éléments de traitement (10) servant à travailler le sol ou à traiter une culture, les organes de traitement (9) pouvant au moins être déplacés entre une position de service et une position de transport en pivotant la ou les structures de bras porteur autour du ou des axes de pivotement,
l'engin agricole (1) comprenant une structure de protection mobile (11) servant à protéger au moins partiellement les organes de traitement (9) dans la position de transport, la structure de protection mobile comprenant deux barres de protection (12) situées au niveau de côtés opposés de l'engin agricole, les barres de protection pouvant être déplacées entre une position de protection, permettant de protéger au moins partiellement les organes de traitement (9), et une position abaissée, dans laquelle un déplacement des organes de traitement entre la position de service et la position de transport est possible, la structure de protection mobile (11) étant configurée pour déplacer les barres de protection (12) vers le haut et vers l'arrière par rapport à la direction normale de déplacement (A) lorsque les barres de protection sont déplacées de la position abaissée à la position de protection,
**caractérisé en ce que** la structure de protection mobile (11) est configurée pour déplacer les barres de protection (12) dans un plan incliné entre la position abaissée et la position de protection.

2. Engin agricole (1) selon la revendication 1, dans lequel le plan incliné est essentiellement parallèle à la direction normale de déplacement.

3. Engin agricole (1) selon l'une quelconque des revendications 1 et 2, dans lequel la structure de protection mobile (11) est configurée pour déplacer les barres de protection (12) l'une vers l'autre lorsque les barres de protection sont déplacées de la position abaissée à la position de protection.

4. Engin agricole (1) selon l'une quelconque des revendications 1 à 3, dans lequel les barres de protection (12), dans la position de protection, s'étendent à l'arrière de l'engin agricole jusqu'aux organes de traitement (9) dans la position de transport ou au-delà de ceux-ci.

5. Engin agricole (1) selon l'une quelconque des revendications 1 à 4, dans lequel la structure de protection mobile (10) comprend, au niveau de chaque côté, deux bras de liaison pivotants (17, 18) raccordant la barre de protection mobile (12) respective au châssis (2), dans lequel le châssis, les bras de liaison et la barre de protection, de chaque côté de l'engin agricole, forment un quadrilatère articulé plan.

6. Engin agricole (1) selon la revendication 5, dans lequel le quadrilatère articulé plan est un quadrilatère articulé parallélogrammatique.

7. Engin agricole (1) selon la revendication 5 ou 6, dans lequel les bras de liaison pivotants peuvent pivoter autour d'axes de pivotement s'étendant dans un plan essentiellement vertical et disposés à un angle aigu par rapport à la direction normale de déplacement de façon à obtenir un déplacement des barres de protection (12) dans un plan incliné entre la position abaissée et la position de protection.

8. Engin agricole (1) selon l'une quelconque des revendications précédentes, dans lequel la structure de protection mobile (11) comprend un dispositif d'actionnement (13) servant à déplacer la structure de protection mobile entre la position abaissée et la position de protection.

9. Engin agricole (1) selon l'une quelconque des revendications précédentes, dans lequel la structure de protection mobile (11) comprend un mécanisme d'entraînement (14) servant à convertir un mouvement d'actionnement du dispositif d'actionnement (13) en un mouvement de la structure de protection mobile (11) entre la position abaissée et la position de protection.

10. Engin agricole (1) selon la revendication 8 ou 9, dans lequel le dispositif d'actionnement (13) est un dispositif d'actionnement hydraulique.

11. Engin agricole (1) selon l'une quelconque des revendications précédentes, l'engin agricole comprenant un dispositif de sécurité configuré pour empêcher un déplacement des organes de traitement (9) entre la position de service et la position de transport, lorsque la structure de protection mobile (11) est placée dans la position de protection.

12. Engin agricole (1) selon la revendication 11, dans lequel le dispositif de sécurité comprend un robinet d'arrêt (28) disposé dans un circuit d'entraînement hydraulique de la structure de bras porteur, dans lequel le robinet d'arrêt peut être déplacé entre une position fermée et une position ouverte, et dans lequel le robinet d'arrêt est relié mécaniquement à la structure de protection mobile (11) de telle sorte que le robinet d'arrêt se trouve dans la position fermée lorsque les barres de protection se trouvent dans la position de protection, et le robinet d'arrêt est placé dans la position ouverte lorsque les barres de protection se trouvent dans la position abaissée.

13. Engin agricole (1) selon l'une quelconque des revendications précédentes, dans lequel la structure de protection mobile (11) comprend un élément de protection allongé (22) raccordant les deux barres de protection (12) opposées de façon à protéger le côté avant des organes de traitement (9) dans la position de transport.

14. Engin agricole (1) selon la revendication 13, dans lequel un côté avant de l'élément de protection allongé (22) est installé à pivotement au niveau d'un emplacement d'installation fixe (24), et dans lequel les deux extrémités (25) de l'élément de protection allongé sont raccordées à coulissement aux barres de protection.

15. Engin agricole (1) selon l'une quelconque des revendications précédentes, dans lequel au moins une extrémité des barres de protection (12) est disposée sur un coin de l'engin agricole de façon à servir de dispositif de marquage qui marque un coin et/ou un côté de l'engin agricole (1).

16. Engin agricole (1) selon l'une quelconque des revendications précédentes, dans lequel la structure de protection mobile est configurée pour assurer une protection continue des organes de traitement (9) au niveau d'une extrémité avant, au niveau de côtés opposés, et au moins au niveau de régions de coin d'une extrémité arrière de l'engin agricole.

17. Engin agricole (1) selon l'une quelconque des revendications précédentes, dans lequel les barres de protection (12), lorsqu'elles sont placées dans la position de protection, sont disposées à une hauteur dans la plage de 1 mètre à 2 mètres, de préférence à une hauteur dans la plage de 1,2 mètre à 1,7 mètre.
